# FASCICULE DE BREVET EUROPEEN

(11) **EP 1 394 983 B1**
(45) Date de publication et mention de la délivrance du brevet: **10.10.2007**
(21) Numéro de dépôt: 03292042.3
(22) Date de dépôt: 19.08.2003
(51) Int. Cl.: H04L 12/24

(54) **Dispositif de gestion automatique d'équipements de réseau**
System zur automatischen Verwaltung von Netzwerkgeräten
System for automatic network device management

(30) Priorité: 29.08.2002 FR 0210714
(43) Date de publication de la demande: 03.03.2004
(73) Titulaire: Alcatel Lucent, 75008 Paris (FR)
(72) Inventeur: Chevanne Michel, 92140 Clamart (FR); Drugmand , Philippe, 92260 Fontenay aux roses (FR)
(74) Mandataire: Chaffraix, Sylvain

(56) Documents cités:
- EP-A- 1 107 108
- US-B1- 6 349 306
- WOLLSCHLAEGER M: "A framework for fieldbus management using XML descriptions" FACTORY COMMUNICATION SYSTEMS, 2000. PROCEEDINGS. 2000 IEEE INTERNATIONAL WORKSHOP ON PORTO, PORTUGAL 6-8 SEPT. 2000, PISCATAWAY, NJ, USA,IEEE, US, 6 septembre 2000 (2000-09-06), pages 3-10, XP010521789 ISBN: 0-7803-6500-3

## Description

L'invention concerne le domaine de la gestion d'équipements d'un réseau de communications, et plus particulièrement celui de la gestion de l'intégration et de l'évolution de nouveaux équipements de réseau par un dispositif de gestion de réseau.

Les réseaux de communications comportent généralement un système de gestion de réseau (ou NMS pour « Network Management System »), également appelé système d'exploitation du réseau, permettant à leurs gestionnaires (ou opérateurs) de gérer et surveiller les équipements qui constituent leurs réseaux à l'aide d'outils mettant en oeuvre des fonctions et des services, également appelés OAM&P (pour « Operations, Administration, Maintenance and Provisioning »), voir par exemple le document US-A-6 349 306. On entend ici par « équipement » tout type de matériel, comme par exemple des serveurs, des terminaux, des commutateurs, des routeurs ou des concentrateurs, capable d'échanger des données selon un protocole de gestion de réseau avec le système de gestion NMS, comme par exemple le protocole SNMP (pour « Simple Network Management Protocol » RFC 2571-2580).

Chaque équipement comporte une base d'informations de gestion (ou MIB pour « Management Information Base »), également appelée base d'instances d'objets, comprenant des champs d'information dont les valeurs spécifiques le caractérisent. Par ailleurs, chaque MIB d'équipement est associée à une définition de base d'informations de gestion, également appelée définition de MIB, stockée dans le système de gestion NMS.

Chaque fois qu'un nouvel équipement est mis sur le marché, il doit disposer d'une application de gestion de réseau de sorte qu'il puisse être intégré dans le réseau et géré par son opérateur.

Afin de faciliter cette intégration, l'homme de l'art a développé des outils, comme par exemple les navigateurs MIB et les applications NMS.

Les navigateurs MIB sont des outils permettant d'extraire des MIBs des équipements les informations qui les caractérisent. Ils sont généralement implantés dans un serveur de gestion du réseau qui comporte également des jeux de définitions de MIB contenant chacun des informations permettant de gérer spécifiquement l'un des équipements du réseau. Lorsque le gestionnaire du réseau souhaite disposer des informations qui définissent un équipement, le serveur de gestion doit charger toutes les définitions de MIB qui correspondent au type de l'équipement, puis sélectionner la définition de MIB associée à l'équipement désigné, et enfin demander au navigateur MIB d'aller chercher dans la MIB de cet équipement les informations qui le caractérisent. Ces informations sont ensuite communiquées par le serveur de gestion à une interface graphique du NMS, de sorte que le gestionnaire puisse en prendre connaissance et agir en conséquence.

Ces navigateurs MIB présentent l'avantage de ne pas nécessiter de programmation une fois qu'ils ont été implantés dans le serveur de gestion. Ils sont donc facilement implantables et permettent une intégration rapide des équipements dont les descripteurs sont déjà implantés dans le serveur de gestion. Mais, ils constituent une approche fermée dans la mesure où ils ne peuvent pas évoluer de manière à fournir de meilleurs services de gestion.

Les applications NMS sont des outils permettant de présenter des « vues » des équipements du réseau sur l'interface graphique utilisateur. Plus précisément, ces outils comprennent des jeux de descripteurs comportant chacun des données désignant un type d'équipements du réseau, des données désignant les codes nécessaires, généralement en langage Java, pour gérer ce type d'équipements et notamment la mise en oeuvre d'un certain nombre d'interfaces, ainsi qu'éventuellement un ensemble de fichiers de configuration, par exemple de type XML et contenant des informations permettant de gérer un type d'équipements du réseau. Lorsqu'un tel descripteur reçoit du NMS une requête désignant un équipement appartenant au type qu'il gère, il charge un navigateur du NMS d'extraire de la MIB de l'équipement désigné les valeurs de certains de ses champs, puis il délivre au NMS les données représentatives de ces valeurs extraites.

Une telle application NMS utilisant des fichiers de description en langage XML (*eXtended Markup Language*) est par exemple décrit dans le document « A Framework for Fieldbus Management Using XML Descriptions » de Martin Wollschlaeger, paru dans « Factory communication systems, 2000. Proceedings. 2000 IEEE International workshop on Porto, Portugal 6-8 sept. 2000. ».

Ces applications NMS sont basées sur de la programmation permettant une intégration efficace de l'équipement au sein du réseau. Il est donc possible de les faire évoluer de manière à fournir de meilleurs services de gestion. Mais, ils doivent faire l'objet d'une nouvelle programmation chaque fois que l'on veut intégrer un nouveau type d'équipements, ce qui accroît notablement les temps d'intégration et donc les coûts.

Par conséquent, aucun outil connu n'est réellement satisfaisant à la fois en matière de temps d'intégration et de capacité à évoluer.

L'invention a donc pour but de remédier à tout ou partie des inconvénients précités.

Elle propose à cet effet un dispositif de gestion de données de gestion d'équipements d'un réseau de communications, comportant chacun une base d'informations de gestion (ou MIB), comprenant des valeurs de champs et associée à une définition de MIB comportant des champs et accessible dans un système de gestion du réseau.

Ce dispositif se caractérise par le fait qu'il comprend au moins un descripteur automatique, de type générique, qui comporte des premières données désignant au moins un type d'équipements du réseau et des secondes données désignant des définitions de MIBs associées à ce type d'équipements, et qui est arrangé de sorte qu'en cas de réception de données désignant le type d'équipements, il puisse accéder aux champs des définitions de MIB qui sont associées au type désigné, puis délivrer des troisièmes données représentatives des champs des équipements appartenant audit type désigné.

On entend ici par « descripteur automatique », un descripteur du type de ceux présentés dans l'introduction (c'est-à-dire comportant un ensemble de fichiers de codes de programmes, de préférence en langage Java et permettant de mettre en oeuvre un certain nombre d'interfaces, et un ensemble de fichiers de configuration, par exemple de type XML et contenant des informations permettant de gérer un type d'équipements du réseau), mais comportant également un fichier de codes de programme comportant les premières données désignant au moins un type d'équipements, et un autre fichier de codes de programme comportant les secondes données désignant les définitions de MIB associées aux équipements dudit type.

Selon une autre caractéristique de l'invention, le dispositif de gestion peut comporter un jeu de descripteurs classiques (ou « non automatiques ») en complément du descripteur automatique.

Selon encore une autre caractéristique de l'invention, le descripteur automatique est préférentiellement agencé de sorte qu'en cas de réception de données désignant l'adresse d'un équipement appartenant au type désigné, il puisse accéder au champ de la définition de MIB, associée à cet équipement désigné, et extraire de la MIB de l'équipement désigné les valeurs de certains au moins des champs qui sont contenus dans ladite définition de MIB, puis délivrer des troisièmes données représentatives de ces valeurs extraites.

Par ailleurs, lorsque les MIBs des équipements sont agencées sous la forme d'un arbre associé à au moins une table, le descripteur automatique est préférentiellement agencé de manière à délivrer les troisièmes données sous la forme d'un arbre et d'au moins une table comportant les valeurs de champs extraites.

Préférentiellement, le descripteur automatique est agencé pour extraire les valeurs de champs des MIBs des équipements du réseau.

Le descripteur automatique peut également comporter des quatrièmes données désignant une représentation graphique permettant l'affichage des troisièmes données selon un format choisi.

Par ailleurs, les valeurs des champs sont préférentiellement extraites des MIBs selon un protocole de gestion choisi parmi SNMP, CMISE/CMIP, CORBA et TL1.

L'invention porte également sur un serveur de gestion de réseau de communications comprenant des équipements comportant chacun une MIB, comprenant des valeurs de champs et associée à une définition de MIB comportant des champs, et équipé d'un dispositif de gestion du type de celui présenté ci-avant.

L'invention porte en outre sur un procédé de gestion de données de gestion d'équipements d'un réseau de communications, comportant chacun une MIB associée à une définition de MIB accessible via un système de gestion du réseau.

Ce procédé se caractérise par le fait qu'il consiste à prévoir au moins un descripteur automatique du type présenté ci-avant, et en cas de désignation d'un type d'équipements géré par le descripteur automatique, à accéder à l'aide de ce dernier aux champs des définitions de MIB associées au type désigné, puis à délivrer des (troisièmes) données représentatives des champs des équipements appartenant au type désigné.

Le procédé selon l'invention pourra comporter des caractéristiques complémentaires qui pourront être prises séparément et/ou en combinaison, et en particulier :
- lorsque l'on désigne une adresse d'un équipement en complément de son type, on peut accéder à l'aide du descripteur automatique au champ de la définition de MIB associée à cet équipement et extraire de la MIB de l'équipement désigné les valeurs de certains au moins des champs contenus dans ladite définition de MIB, puis on peut délivrer des troisièmes données représentatives de ces valeurs extraites,
- en présence de MIBs agencées sous la forme d'un arbre associé à au moins une table, on peut délivrer à l'aide du descripteur automatique des troisièmes données également sous la forme d'un arbre et d'au moins une table comportant les valeurs de champs extraites,
- lorsque le descripteur automatique comporte des quatrièmes données qui désignent une représentation graphique, on peut afficher les troisièmes données selon un format choisi qui correspond à cette représentation graphique.

L'invention peut notamment être mise en oeuvre dans toutes les technologies réseaux qui doivent être gérées, et notamment dans les réseaux de transmission (par exemple de type WDM, SONET, SDH), de données (par exemple de type Internet-IP ou ATM) ou de voix (par exemple de type classique, mobile ou NGN).

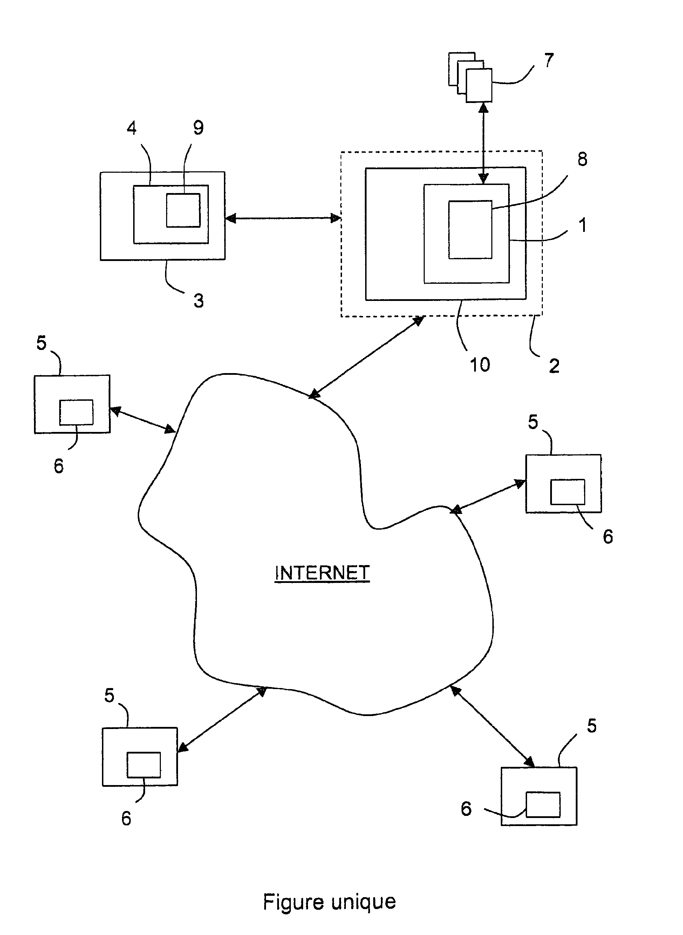

D'autres caractéristiques et avantages de l'invention apparaîtront à l'examen de la description détaillée ci-après, et de l'unique figure annexée qui illustre de façon schématique un exemple de réseau de communications équipé d'un dispositif de gestion selon l'invention implanté dans un serveur de gestion de réseau. Cette figure est, pour l'essentiel, de caractère certain. En conséquence, elle pourra non seulement servir à compléter l'invention, mais aussi contribuer à sa définition, le cas échéant.

L'invention propose un dispositif de gestion destiné à permettre au gestionnaire d'un réseau de communication, via le système de gestion du réseau, d'accéder rapidement et de façon simplifiée aux informations de gestion des équipements du réseau qu'il souhaite gérer et/ou configurer.

Dans l'exemple illustré sur l'unique figure, le dispositif de gestion 1 est implanté dans un serveur de gestion 2 du système de gestion du réseau (ou NMS pour « Network Management System »), et plus précisément dans son module de gestion 10. Mais il pourrait être implanté dans un boîtier externe, couplé audit serveur de gestion 2. Ce serveur de gestion 2 est couplé à un terminal de gestion 3 du gestionnaire du réseau, équipé d'une interface graphique 4 de type GUI (pour « Graphical User Interface »). Par ailleurs, dans l'exemple illustré, on n'a représenté qu'un unique serveur de gestion 2. Mais, on peut envisager que le NMS comporte plusieurs serveurs de gestion, chacun équipé d'un dispositif de gestion 1, et par exemple destinés à permettre chacun la gestion d'une partie des équipements du réseau.

Le réseau de communications comporte une multiplicité d'équipements de réseau 5, comme par exemple des serveurs, des terminaux, des commutateurs ou des routeurs, pouvant échanger des données, selon un protocole de gestion de réseau, avec le NMS et notamment avec son serveur de gestion 2. Chaque équipement 5 comporte classiquement une base d'informations de gestion 6 (ou MIB pour « Management Information Base »), également appelée base d'instances d'objets.

Chaque MIB 6 comporte des champs d'information dont les valeurs spécifiques caractérisent l'équipement associé. Par ailleurs, chaque MIB est associée à une définition de base d'informations de gestion 7, également appelée définition de MIB, stockée dans le NMS et accessible au serveur de gestion 2, et notamment à son module de gestion 10.

Une définition de MIB 7 décrit généralement, pour l'équipement concerné, tous ses attributs possibles, un type de données (string, integer, ...), l'organisation de nommage (tout est généralement organisé sous la forme d'un arbre associé à une ou plusieurs tables), le texte décrivant l'équipement (ou objet), les droits d'accès, la hiérarchie des objets (ou équipements), et analogue.

Par exemple, un attribut (ou champ) peut être défini comme indiqué ci-après dans une définition de MIB 7 :
sysDescr OBJECT-TYPE
   SYNTAX DisplayString (SIZE (0...255))
   ACCESS read-only ou read/write
   STATUS Mandatory
   DESCRIPTION
      "Une description textuelle de l'équipement (ou entité). Cette valeur doit inclure le nom complet et l'identification de la version du type de matériel ("hardware") du système, du logiciel (« software ») du système d'exploitation, et du logiciel réseau. Il est obligatoire que cela ne contienne que des caractères inscriptibles, en codes ASCII."
   ::= {system 1}

Ces définitions de MIB 7 répondent au standard RFC 1213.

Dans ce qui suit, on considère à titre d'exemple non limitatif que le réseau de communications est de type Internet (IP) et que le protocole de gestion du réseau est le protocole SNMP (pour « Simple Network Management Protocol » RFC 2571-2580). Bien entendu, l'invention s'applique à d'autres types de réseau, comme par exemple aux réseaux de transmission de type WDM, SONET ou SDH, de données de type ATM, ou de voix de type classique, mobile ou NGN, et à d'autres protocoles de gestion de réseau, comme par exemple TL1, CORBA ou CMISE/CMIP.

Le dispositif de gestion 1 comporte un descripteur automatique 8, au moins, comprenant des premières données, qui désignent un ou plusieurs types d'équipements 5 du réseau, ainsi que des secondes données, qui désignent les définitions de MIBs associées aux équipements de chacun de ces types.

Un descripteur automatique est constitué d'un ensemble de fichiers de codes de programmes, de préférence en langage Java, qui permettent de mettre en oeuvre un certain nombre d'interfaces, et d'un ensemble de fichiers de configuration, par exemple de type XML, qui contiennent des informations permettant de gérer un ou plusieurs types d'équipements 5 du réseau. Il présente donc une structure générale voisine de celle d'un descripteur classique. Mais, contrairement à ces descripteurs classiques qui ne sont associés qu'à un seul et unique équipement de réseau, il est de type générique du fait qu'il comporte une structure de base adaptée à tous les équipements du réseau, couplée à un premier fichier contenant des données qui désignent un ou plusieurs types d'équipements, et à un second fichier contenant des données qui désignent les définitions de MIB associées aux équipements du type considéré. Grâce à cette structure originale, le descripteur automatique 8 peut être adapté à tout type d'équipements. II suffit en effet de modifier dans le premier fichier les données qui désignent le type d'équipements, et dans le second fichier les données qui désignent les définitions de MIB 7 associées aux équipements du type considéré.

Grâce à la structure présentée ci-avant, le descripteur automatique 8 est capable, lorsqu'il reçoit du module de gestion 10 du serveur de gestion 2 (à la requête du terminal de gestion 3) des données qui désignent le type d'équipements 5 pour lequel il est configuré, d'accéder aux champs des définitions de MIB 7 du NMS, qui sont associées au type désigné, et délivrer des troisièmes données représentatives des champs des équipements 5 du réseau qui appartiennent à ce type. Muni de ces troisièmes données, le serveur de gestion 2 peut alors alimenter l'interface graphique 4 du terminal de gestion 3, via le serveur de gestion 2, afin que le gestionnaire du réseau puisse les visualiser sous la forme d'un arbre présentant les différents équipements 5 du réseau regroupés sous le type initialement demandé.

Lorsque le gestionnaire du réseau souhaite obtenir des informations sur l'un des équipements 5 du type initialement demandé (ou en d'autres termes pour obtenir des détails sur une partie de l'arbre affiché), il transmet au module de gestion 10 du serveur 2, par l'intermédiaire de son interface graphique GUI 4, l'adresse de cet équipement. Le module de gestion 10 transmet cette adresse au descripteur automatique 8 qui gère les équipements du type auquel il appartient.

Le descripteur automatique 8 reçoit la désignation de l'adresse d'un équipement 5 dont il gère le type, il accède au descripteur de MIB 7 associé à cet équipement afin de déterminer les champs dont il va devoir obtenir les valeurs spécifiques (contenues dans la MIB 6 de l'équipement). II sait alors quels attributs et/ou tables existent dans la MIB 6 de l'équipement 5. Par exemple, une fois que le descripteur automatique 8 sait que le champ (ou attribut) « sysDescr », présenté ci-avant, existe, il n'a plus qu'à obtenir sa valeur (par exemple égale à « routeur n°1 ») qui est contenue dans la MIB 6 de l'équipement 5.

Une fois que le descripteur automatique 8 est en possession du « comportement » de l'équipement 5, il va chercher dans la MIB 6 de l'équipement 5 les valeurs spécifiques des champs extraits de la définition de MIB 7 associée à l'équipement.

Les valeurs des champs sont préférentiellement extraites des MIBs 6 selon le protocole de gestion SNMP. Mais, elles pourraient également être extraites à l'aide d'un autre protocole de gestion comme par exemple CMISE/CMIP, CORBA ou TL1,

Ces valeurs de champs constituent des troisièmes données qui sont fournies par l'équipement 5 interrogé au descripteur automatique 8, puis communiquées au terminal de gestion 3 de sorte qu'elles puissent être affichées selon un format défini par le descripteur automatique 8.

Il est possible d'utiliser le descripteur automatique 8 soit du côté serveur et du côté client, soit seulement du côté serveur. Dans le premier cas, l'affichage des troisièmes données se fait sous la forme d'un arbre et d'au moins une table comportant les valeurs de champs extraites, lorsque les MIBs 6 des équipements 5 sont ainsi agencées. Pour ce faire, il suffit que le module de navigation 9 (ou « browser ») soit par exemple similaire au navigateur ou « explorateur » qui équipe un microordinateur (sa spécificité étant l'affichage de l'état alarme pour chaque objet ou équipement représenté).

Dans le second cas, on adjoint au descripteur automatique 8 un fichier complémentaire comportant des quatrièmes données qui désignent une représentation graphique choisie à destination de l'interface graphique (GUI) 4. Cette représentation graphique correspond à un format d'affichage particulier qui permet d'adapter l'affichage des troisièmes données sur l'écran du terminal de gestion 3 en fonction de l'équipement concerné, et plus précisément de ses caractéristiques propres.

Dans ces deux modes de réalisation, les quatrièmes données, qui désignent la représentation graphique, sont transmises au module de gestion 10 du serveur de gestion 2, lequel est capable d'agencer les troisièmes données, conjointement fournies par le descripteur automatique 8, selon le format défini par la représentation graphique désignée. Puis les troisièmes données sont transmises à l'interface graphique 4 du terminal de gestion 3 afin d'être affichées.

Cela permet de faciliter le traitement, par le gestionnaire du réseau, des informations qui définissent l'équipement affiché.

Dans ce qui précède, il a été question d'un dispositif de gestion 1 implanté dans un serveur de gestion 2 et comportant au moins un descripteur automatique 8 pouvant extraire des données des MIBs 6 des équipements 5 qu'il gère et pouvant coopérer avec un module de navigation 9, de l'interface graphique GUI 4 du gestionnaire du réseau, pour permettre l'affichage des données extraites dans un format choisi. Un tel dispositif de gestion peut donc être implanté dans un serveur de gestion de l'art antérieur déjà équipé d'un navigateur MIB et de descripteurs classiques. Dans ce cas, le descripteur automatique 8 de l'invention remplace les descripteurs classiques et coopère avec le module de navigation de l'interface graphique GUI 4.

L'invention offre également un procédé de gestion de données de gestion d'équipements 5 d'un réseau de communications, comportant chacun une MIB 6 associée à une définition de MIB 7 accessible via un NMS.

Celui-ci peut être mis en oeuvre à l'aide du dispositif de gestion 1 présenté ci-avant. Les fonctions principales et les sous-fonctions optionnelles assurées par les étapes de ce procédé étant sensiblement identiques à celles assurées par les différents moyens constituant le dispositif de gestion 1, seules seront résumées ci-après les étapes mettant en oeuvre les fonctions principales du procédé selon l'invention.

Ce procédé se caractérise par le fait qu'il consiste à prévoir au moins un descripteur automatique 8 du type de celui présenté ci-avant, et en cas de désignation d'un type d'équipements 5 géré par le descripteur automatique 8, à accéder à l'aide de ce dernier aux champs des définitions de MIB 7 associées au type désigné, puis à délivrer des (troisièmes) données représentatives des champs des équipements 5 appartenant au type désigné.

Préférentiellement, lorsque l'on désigne l'adresse d'un équipement 5 en complément de son type, on peut accéder à l'aide du descripteur automatique 8 au champ de la définition de MIB 7 qui est associée à cet équipement 5 désigné, puis extraire de la MIB 6 de l'équipement 5 désigné les valeurs de certains au moins des champs contenus dans la définition de MIB 7 qui lui est associée, puis on peut délivrer des troisièmes données représentatives de ces valeurs extraites.

L'invention ne se limite pas aux modes de réalisation de procédé, dispositif de gestion et serveur de gestion décrits ci-avant, seulement à titre d'exemple, mais elle englobe toutes les variantes que pourra envisager l'homme de l'art dans le cadre des revendications ci-après.

Ainsi, on a décrit un réseau dans lequel le système de gestion NMS ne comportait qu'un unique serveur de gestion équipé du dispositif de gestion selon l'invention agencé de manière à permettre la gestion de l'ensemble des équipements du réseau. Mais, le système de gestion NMS pourrait comporter plusieurs serveurs de gestion équipés chacun d'un dispositif de gestion selon l'invention agencé de manière à permettre la gestion d'une partie des équipements du réseau.

Par ailleurs, le dispositif selon l'invention peut être incorporé dans un système de gestion de l'art antérieur, disposant de descripteurs classiques, son descripteur automatique venant alors compléter lesdits descripteurs classiques.

## Revendications

1. Dispositif (1) de gestion de données de gestion d'équipements (5) d'un réseau de communications, comportant chacun une base d'informations de gestion (6), comprenant des valeurs de champs et associée à une définition de base d'intimations de gestion (7) comportant des champs et accessible dans un système de gestion dudit réseau, **caractérisé en ce qu**'il comprend au moins un descripteur automatique (8) i) comportant un premier fichier contenant des premières données désignant au moins un type d'équipements (5) du réseau et un second fichier contenant des secondes données désignant des définitions de base d'informations de gestion (7) associées audit type d'équipements (5), et ii) agencé, en cas de réception de données désignant ledit type d'équipements (5) en provenance du système de gestion dudit réseau, pour accéder aux champs desdites définitions de base d'informations de gestion (7) associées au type désigné, puis délivrer des troisièmes données représentatives des champs des équipements (5) appartenant au type désigné.

2. Dispositif selon la revendication 1, **caractérisé en ce qu'**il comporte un jeu de descripteurs non automatiques en complément dudit descripteur automatique (8).

3. Dispositif selon l'une des revendications 1 et 2, **caractérisé en ce** ledit descripteur automatique (8) est agencé, en cas de réception de données désignant une adresse d'un équipement appartenant audit type désigné, pour accéder aux champs de la définition de base d'informations de gestion (7) associée à cet équipement (5) désigné, puis ordonner l'extraction dans la base d'informations de gestion (7) de l'équipement (5) désigné les valeurs de certains au moins desdits champs contenus dans ladite définition (7), puis délivrer des troisièmes données représentatives desdites valeurs extraites.

4. Dispositif selon la revendication 3, **caractérisé en ce que**, lorsque lesdites bases d'informations de gestion (6) desdits équipements (5) sont agencées sous la forme d'un arbre associé à au moins une table, ledit descripteur automatique (8) est agencé pour délivrer des troisièmes données sous la forme d'un arbre et d'au moins une table comportant lesdites valeurs de champs extraites.

5. Dispositif selon l'une des revendications 3 et 4, **caractérisé en ce que** ledit descripteur automatique (8) est agencé pour extraire lesdites valeurs de champs desdites bases d'informations de gestion (6) des équipements (5) du réseau.

6. Dispositif selon l'une des revendications 1 à 5, **caractérisé en ce que** ledit descripteur automatique (8) comporte des quatrièmes données désignant une représentation graphique propre à permettre l'aménage desdites troisièmes données selon un format choisi.

7. Dispositif selon l'une des revendications 1 à 6, **caractérisé en ce que** ledit descripteur automatique (8) est constitué d'au moins un ensemble de fichiers de codes de programme et d'au moins un ensemble de fichiers de configuration.

8. Dispositif selon la revendication 7, **caractérisé en ce que** l'un desdits fichiers de codes de programme comporte lesdites premières données désignant ledit type d'équipements (5), et un autre desdits fichiers de codes de programme comporte lesdites secondes données désignant lesdites définitions de base d'informations de gestion (7) associées aux équipements (5) dudit type.

9. Dispositif selon l'une des revendications 7 et 8, **caractérisé en ce que** lesdits codes de programme sont en langage Java.

10. Dispositif selon l'une des revendications 1 à 9, **caractérisé en ce que** lesdites valeurs de champs sont extraites selon un protocole choisi dans un groupe comprenant SNMP, CORBA, CMISE/CMIP et TL1.

11. Serveur (2) de gestion d'un réseau de communications comprenant des équipements comportant chacun une base d'informations de gestion (MIB), comprenant des valeurs de champs et associée à une définition de base d'informations de gestion comportant des champs, **caractérisé en ce qu'**il comprend un dispositif de gestion (1) selon l'une des revendications précédentes.

12. Procédé de gestion de données de gestion d'équipements (5) d'un réseau de communications, comportant chacun une base d'informations de gestion (6), comprenant des valeurs de champs et associée à une définition de base d'informations de gestion (7) comportant des champs et accessible dans un système de gestion dudit réseau, **caractérisé en ce qu'**il consiste à obtenir au moins un descripteur automatique (8) comportant des premières données désignant au moins un type d'équipements (5) du réseau et des secondes données désignant des définitions de base d'informations de gestion (7) associées audit type d'équipements, et en cas de désignation d'un type d'équipements (5) en provenance du système de gestion dudit réseau, à accéder à l'aide dudit descripteur automatique (8) aux champs desdites définitions de base d'informations de gestion (7) associées au type désigné, puis à délivrer des troisièmes données représentatives des champs des équipements (5) appartenant au type désigné.

13. Procédé selon la revendication 12, **caractérisé en ce qu**'en cas de désignation d'une adresse d'un équipement (5) en complément de son type, on accède à l'aide dudit descripteur automatique (8) au champ de la définition de base d'informations de gestion (7) associée audit équipement (5) désigné, et on extrait de la base d'informations de gestion (6) de l'équipement (5) désigné par l'adresse reçue les valeurs de certains au moins desdits champs contenus dans ladite définition (7), puis on délivre des troisièmes données représentatives desdites valeurs extraites.

14. Procédé selon la revendication 13, **caractérisé en ce qu**'en présence de bases d'informations de gestion (6) agencées sous ta forme d'un arbre associé à au moins une table, on délivre à l'aide dudit descripteur automatique (8) des troisièmes données sous la forme d'un arbre et d'au moins une table comportant lesdites valeurs de champs extraites.

15. Procédé selon l'une des revendications 12 à 14, **caractérisé en ce que**, lorsque ledit descripteur automatique (8) comporte des quatrièmes données désignant une représentation graphique, on affiche lesdites troisièmes données selon un format choisi correspondant à ladite représentation graphique.

16. Utilisation des procédé, dispositif de gestion (1) et serveur de gestion (2) selon l'une des revendications précédentes dans les technologies réseaux devant être gérées.

17. Utilisation selon la revendication 16, **caractérisé en ce que** lesdites technologies réseaux sont choisies dans un groupe comprenant les réseaux de transmission, en particulier de type WDM, SONET et SDH, de données. en particulier de type Internet-IP et ATM. et de voix, en particulier de type classique, mobile et NGN.

## Claims

1. A system (1) for managing management data of plant (5) of a communications network, each unit of the plant including a management information base (6) containing values of fields and associated with a management information base definition (7) including fields and accessible in a network management system (NMS), which system is **characterized in that** it includes at least one automatic descriptor (8) that: i) includes a first file containing first data designating at least one type of network plant (5) and a second file containing second data designating management information base definitions (7) associated with said type of plant (5), and ii) is adapted, in the event of receiving data designating said type of plant (5) from the network management system, to access the fields of said management information base definitions (7) associated with the designated type and then to deliver third data representative of the fields of the plant (5) of the designated type.

2. A system according to claim 1, **characterized in that** it includes a set of non-automatic descriptors in addition to said automatic descriptor (8).

3. A system according to claim 1 or claim 2, **characterized in that** said automatic descriptor (8) is adapted, in the event of receiving data designating an address of a plant unit of said designated type, to access the fields of the management information definition (7) associated with said designated unit of the plant (5), then to command extraction from the management information base (7) of the designated plant (5) of the values of at least some of said fields contained in said definition (7), and then to deliver third data representative of said extracted values.

4. A system according to claim 3, **characterized in that** if said management information bases (6) of said plant (5) take the form of a tree associated with at least one table, said automatic descriptor (8) is adapted to deliver third data in the form of a tree and at least one table including said extracted field values.

5. A system according to either claim 3 or claim 4, **characterized in that** said automatic descriptor (8) is adapted to extract said field values from said management information bases (6) of the plant (5) of the network.

6. A system according to any one of claims 1 to 5, **characterized in that** said automatic descriptor (8) includes fourth data designating a graphical representation such that said third data can be displayed in a chosen format.

7. A system according to any one of claims 1 to 6, **characterized in that** said automatic descriptor (8) consists of at least one set of program code files and at least one set of configuration files.

8. A system according to claim 7, **characterized in that** one of said program code files includes said first data designating said type of plant (5) and another of said program code files includes said second data designating said management information base definitions (7) associated with the plant (5) of said type.

9. A system according to claim 7 or claim 8, **characterized in that** said program codes are in Java.

10. A system according to any one of claims 1 to 9, **characterized in that** said field values are extracted in accordance with a protocol chosen from the group comprising the SNMP, CORBA, CMISE/CMIP, and TL1 protocols.

11. A management server (2) of a communications network including plant wherein each unit of the plant includes a management information base (MIB) that contains values of fields and is associated with a management information base definition including fields, which server is **characterized in that** it includes a management system (1) according to any one of the preceding claims.

12. A method of managing management data of plant (5) of a communications network wherein each unit of the plant includes a management information base (6) containing values of fields and associated with a management information base definition (7) including fields and accessible in a network management system, which method is **characterized in that** it consists in obtaining an automatic descriptor (8) including first data designating at least one type of network plant (5) and second data designating management information based definitions (7) associated with said type(s) of plant and, in the event of designation of a type of plant (5) from the network management system, using said automatic descriptor (8) to access the fields of said management information base definitions (7) associated with the designated type and then delivering third data representative of fields of plant (5) of the designated type.

13. A method according to claim 12. **characterized in that**, if an address of a plant unit (5) is designated in addition to its type, said automatic descriptor (8) is used to access the field of the management information base definition (7) associated with said designated plant (5) and the values from at least some of said fields contained in said definition (7) are extracted from the management information base (6) of the plant (5) designated by the address received, after which third data representative of said extracted values is delivered.

14. A method according to claim 13, **characterized in that**, in the case of management information bases (6) taking the form of a tree associated with at least one table, said automatic descriptor (8) is used to deliver third data in the form of a tree and at least one table including said extracted field values.

15. A method according to any one of claims 12 to 14, **characterized in that** if said automatic descriptor (8) includes fourth data designating a graphical representation, said third data is displayed in a chosen format corresponding to said graphical representation.

16. Use of a method, management system (1), or management server (2) according to any one of the preceding claims in network technologies that have to be managed.

17. Use according to claim 16, **characterized in that** said network technologies are selected from the group comprising transmission networks, in particular WDM, SONET, and SDH networks, data networks, in particular Internet Protocol (IP) and ATM networks, and voice networks, inn particular conventional, mobile, and NGN networks.

## Patentansprüche

1. Verwaltungsvorrichtung (1) zur Datenverwaltung von Geräten (5) eines Kommunikationsnetzwerks , die jeweils eine Verwaltungsinformations-Basis (6) umfassen, die Werte in Feldern umfasst und einer Definition für die Verwaltungsinformations-Basis (7) zugeordnet ist, die Felder umfasst und in einem Verwaltungssystem des genannten Netzwerks zugänglich ist, **dadurch gekennzeichnet, dass** sie mindestens einen automatischen Deskriptor (8) umfasst, der i) eine erste Datei beinhaltet, die erste Daten enthält, die mindestens einen Gerätetyp (5) des Netzwerks bezeichnen, und eine zweite Datei, die zweite Daten beinhaltet, die die Definitionen für die verwaltungsinformtions-Basis (7) enthalten, die dem genannten Gerätetyp (5) zugeordnet sind, und ii) entsprechend ausgeführt ist, um im Fall des Empfangs von Daten, die den genannten Gerätetyp (5) bezeichnen, von dem Verwaltungssystem des genannten Netzwerks, auf die Felder der genannten Definitionen für die verwaltungsinformations-Basis (7) zuzugreifen, die dem bezeichneten Typ zugeordnet sind, und anschließend dritte Daten zu übermitteln, die für die Felder der Geräte (5) repräsentativ sind, die zu dem bezeichneten Typ gehören.

2. Vorrichtung gemäß Anspruch 1, **dadurch gekennzeichnet, dass** sie zusätzlich zu dem genannten automatischen Deskriptor (8) einen Satz nicht automatische Deskriptoren umfasst.

3. Vorrichtung gemäß einem der Ansprüche 1 und 2, **dadurch gekennzeichnet, dass** der genannte automatische Deskriptor (8) entsprechend ausgeführt ist, um im Fall des Empfangs von Daten, die eine Adresse eines Geräts bezeichnen, das zu dem bezeichneten Typ gehört, auf die Felder mit der Definition für die Verwaltungsinformations-Basis (7) zuzugreifen, die diesem bezeichneten Gerät zugeordnet ist, anschließend die Auslesung der Werte zumindest einiger der genannten Felder, die in der genannten Definition (7) enthalten sind, aus der Verwaltungsinformations-Basis (7) des bezeichneten Geräts (5) anzuordnen, anschließend dritte Daten zu übermitteln, die für die genannten, ausgelesenen Werte repräsentativ sind.

4. Vorrichtung gemäß Anspruch 3, **dadurch gekennzeichnet, dass** der genannte automatische Deskriptor (8), sofern die genannten Verwaltungsinformations-Basen (6) der genannten Geräte (5) in Form eines Verzeichnisbaums angeordnet sind, der mindestens einer Tabelle zugeordnet ist, entsprechend ausgeführt ist, um dritte Daten in Form eines Verzeichnisbaums und mindestens einer Tabelle, die die genannten Werte der ausgelesenen Felder umfasst, zu übermitteln.

5. Vorrichtung gemäß einem der Ansprüche 3 und 4, **dadurch gekennzeichnet, dass** der genannte automatische Deskriptor (8) entsprechend ausgeführt ist, um die genannten Werte der Felder für die genannten Verwaltungsinformations-Basen (6) der Netzwerkgeräte (5) auszulesen.

6. Vorrichtung gemäß einem der Ansprüche 1 bis 5, **dadurch gekennzeichnet, dass** der genannte automatische Deskriptor (8) vierte Daten umfasst, die eine spezielle grafische Darstellung bezeichnen, um die Anzeige der genannten dritten Daten in einem gewählten Format zu ermöglichen.

7. Vorrichtung gemäß einem der Ansprüche 1 bis 6, **dadurch gekennzeichnet, dass** der genannte automatische Deskriptor (8) aus mindestens einer Einheit von Programmcode-Dateien und mindestens einer Einheit von Konfigurationsdateien besteht.

8. Vorrichtung gemäß Anspruch 7, **dadurch gekennzeichnet, dass** eine der genannten Programmcode-Dateien die genannten ersten Daten umfasst, die den Gerätetyp (5) bezeichnen, und eine andere der genannten Programmcode-Dateien die genannten zweiten Daten umfasst, die die genannten Definitionen für die Verwaltungsinformations-Basis (7) bezeichnen, die den Geräten (5) genannten Typs zugeordnet sind.

9. Vorrichtung gemäß einem der Ansprüche 7 und 8. **dadurch gekennzeichnet, dass** die genannten Programmcodes in der Sprache Java vorliegen.

10. Vorrichtung gemäß einem der Ansprüche 1 bis 9, **dadurch gekennzeichnet, dass** die genannten Werte der Felder gemäß einem Protokoll ausgelesen werden, das aus der Gruppe mit SNMP, CORBA, CMISE/CMIP und TL1 ausgewählt wird.

11. Verwaltungsserver (2) eines Kommunikationsnetzwerks, das aus Geräten besteht, die jeweils eine Verwaltungsinformations-Basis (MIB) umfassen, die Werte in Feldern umfasst und einer Definition für eine Verwaltungsinformations-Basis zugeordnet ist, die Felder umfasst, **dadurch gekennzeichnet, dass** er eine Verwaltungsvorrichtung (1) gemäß einem der vorgenannten Ansprüche umfasst .

12. Verfahren zur Datenverwaltung von Verwaltungsgeräten (5) eines Kommunikationsnetzwerks, die jeweils eine Verwaltungs in format ions-Basis (6) umfassen, die Werte in Feldern umfasst und einer Definition für eine Verwaltungsinformations-Basis (7) zugeordnet ist, die Felder umfasst und in einem Verwaltungssystem des genannten Netzwerks zugänglich ist, **dadurch gekennzeichnet, dass** es darin besteht, mindestens einen automatischen Deskriptor (8) zu erhalten, der erste Daten umfasst, die mindestens einen Gerätetyp (5) des Netzwerks bezeichnen, sowie zweite Daten, die Definitionen für die Verwaltungsinformations-Hasis (7) bezeichnen, die dem genannten Gerätetyp zugeordnet sind, und im Fall der Bezeichnung eines Gerätetype (5) durch das Verwaltungssystem des genannten Netzwerks, mit Hilfe des genannten automatischen Deskriptors (8) auf die Felder der genannten Definitionen für die Verwaltungsinformations-Basis (7) zuzugreifen, die dem bezeichneten Typ zugeordnet sind, anschließend dritte Daten zu übermitteln, die für die Felder der Geräte (5) repräsentativ sind, die zu dem bezeichneten Typ gehören.

13. Verfahren gemäß Anspruch 12, **dadurch gekennzeichnet, dass** man im Fall der Bezeichnung einer Adresse eines Geräts (5) als Ergänzung zu seinem Typ mit Hilfe des genannten automatischen Deskriptors (8) auf das Feld mit der Definition für die Verwaltungsinformations-Basis (7) zugreift, die dem genannten, bezeichneten Gerät (5) zugeordnet ist, und man aus der Verwaltungsinformations-Basis (6) des Geräts (5), das durch die empfangene Adresse bezeichnet wird, die Werte zumindest bestimmter der genannten Felder, die in der genannten Definition (7) enthalten sind, ausliest, und man anschließend dritte Daten übermittelt, die für die genannten ausgelesenen werte repräsentativ sind.

14. Verfahren gemäß Anspruch 13, **dadurch gekennzeichnet, dass** man beim Vorhandensein von Verwaltungsinfortations-Basen (6), die in Form eines Verzeichnisbaums angeordnet sind, dem mindestens eine Tabelle zugeordnet ist, mit Hilfe des genannten automatischen Deskriptors (8) dritte Daten in Form eines Verzeichnisbaums und mindestens einer Tabelle übermittelt, die die genannten Werte der ausgelesenen Felder umfassen,

15. Verfahren gemäß einem der Ansprüche 12 bis 14, **dadurch gekennzeichnet, dass** man, wenn der genannte automatische Deskriptor (8) vierte Daten umfasst, die eine grafische Darstellung bezeichnen, die genannten dritten Daten in einem gewählten Format anzeigt, das der genannten grafischen Darstellung entspricht.

16. Einsatz des Verfahrens, der Verwaltungsvorrichtung (1) und des Verwaltungsservers (2) gemäß einem der vorgenannten Ansprüche in Netzwerktechnologien, die verwaltet werden müssen.

17. Einsatz gemäß Anspruch 17, **dadurch gekennzeichnet, dass** die genannten Netzwerktechnologien aus einer Gruppe ausgewählt werden, die Übertragungsnetzwerke, insbesondere vom Typ WDM, SONET und SDH, Datennetzwerke, insbesondere vom Typ Internet-IP und ATM, und Sprachnetzwerke, insbesondere herkömmlichen, mobilen Typs und NGN, umfassen.
